# EUROPEAN PATENT APPLICATION

(11) **EP 4 563 267 A1**
(43) Date of publication of application: **04.06.2025**
(21) Application number: 22952659.5
(22) Date of filing: 31.08.2022
(51) Int. Cl.: B22F 10/28, B22F 1/00, B22F 10/64, C22C 27/02, B33Y 10/00

(54) **TANTALUM-TUNGSTEN ALLOY PRODUCT AND PREPARATION METHOD THEREFOR**

(30) Priority: 26.07.2022 CN 202210885960
(71) Applicant: NINGXIA ORIENT INTELLIGENT MANUFACTURING TECHNOLOGY CO., LTD., Ningxia 753000 (CN)
(72) Inventor: LI, Xiaoping, Shizuishan, Ningxia 753000 (CN); LI, Xingyu, Shizuishan, Ningxia 753000 (CN); ZHANG, Yajun, Shizuishan, Ningxia 753000 (CN); TUO, Wanyong, Shizuishan, Ningxia 753000 (CN); LIU, Lei, Shizuishan, Ningxia 753000 (CN); MA, Jing, Shizuishan, Ningxia 753000 (CN)
(74) Representative: Kohler Schmid Möbus Patentanwälte
(86) International application number: PCT/CN2022/116002
(87) International publication number: WO 2024/021218

(57) **Abstract**

A tantalum-tungsten alloy product and a preparation method therefor. The preparation method for tantalum-tungsten alloy comprises the following steps: (1) providing spherical tantalum-tungsten alloy powder (4), wherein the spherical tantalum-tungsten alloy powder (4) is characterized in that the lower limit of the particle size is 15 µm - 25 µm, the upper limit of the particle size is 50 µm - 60 µm, the time for 50 g of the powder (4) to pass through a standard funnel is 5 - 10 seconds, the sphericity of the powder (4) is greater than or equal to 0.8, the hollow particle ratio of the powder (4) is less than or equal to 5%, and the apparent density is 9 - 11 g/cm³; (2) processing and molding the spherical tantalum-tungsten alloy powder (4) by using a 3D printing process to obtain a printed blank; (3) performing printing post-treatment on the printed blank; and (4) performing vacuum heat treatment on a product from the previous step, wherein the temperature of the vacuum heat treatment is 1350 °C to 1750 °C, and the time is 30 - 90 minutes.

## Description

### Cross-Reference

The present application claims the benefit of priority from Chinese Application No. 202210885960.5, filed on July 26, 2022, the disclosures of which are incorporated herein by reference in its entirety.

### Technical Field

The present application belongs to the technical field of material processing, and particularly relates to a tantalum-tungsten alloy product and a preparation method therefor, more particularly to a preparation process of tantalum-tungsten alloy products by 3D printing.

### Background Art

Tantalum-tungsten alloys, due to excellent high-temperature performances and corrosion resistance, have profound application prospects in the fields of aerospace and military industry. However, the tantalum-tungsten alloys, due to its high hardness and melting point, are greatly difficult to be processed by traditional processing methods, with a low material utilization rate and a long processing period, and are difficult to be prepared into complex components. Hence, it will have important and profound significance for national defense constructions in China to research the preparation of tantalum-tungsten alloy materials by utilizing an additive manufacturing technology to promote the development of aerospace engines with a generation following third generation. Besides, in view of the current situation that there is no additive manufacturing technology for the tantalum-tungsten alloys at home and abroad, it will fill in the gap of related technologies at home and abroad to research and manufacture tantalum-tungsten alloy products having compact and complex structures.

There are two traditional preparation processes for preparing tantalum-tungsten alloy products:
One is a subtractive manufacturing method for ingot, which relates to ingoting → forging → rolling → cutting → machining → polishing → welding, riveting → assembling → product;
another is a powder metallurgy processing method, which relates to mixing a tantalum powder and a tungsten powder in certain ratio and then sintering and molding them.

There is still a need in the art for a better preparation process for tantalum tungsten alloy products.

### Summary of the Invention

The inventors found the problem that due to the characteristics of tantalum-tungsten alloys of high melting points and hardness, conventional forging processes, powder metallurgy and the like are complex in preparation procedures, high in costs and could not be used to prepare complex components, limiting wide applications of the alloys in the fields of aerospace, corrosion resistance and the like.

In the present application, by adjusting a plurality of parameters in 3D printing procedure, a suitable 3D printing process for tantalum-tungsten alloy materials is developed so that tantalum-tungsten alloy products can be prepared by the 3D printing process, thereby solving the problems existing in the preparation of the tantalum-tungsten alloy products by a conventional process, reducing processing costs, and shortening a research period of the products.

The present application aims to overcome defects of traditional processes such as great processing difficulty and difficult processing of complex components, and develop a suitable 3D printing process for tantalum-tungsten alloy materials by a selective laser melting process with spherical tantalum-tungsten powder as a raw material, so that tantalum-tungsten alloy products may be prepared by the 3D printing process, thereby solving existing problems in the preparation of the tantalum-tungsten alloy products by a conventional process, reducing processing costs, shortening a research period of the products, and producing complex tantalum-tungsten products to meet performance requirements of high temperature resistance and corrosion resistance in military and aerospace fields.

In a first aspect, the present application provides a preparation method for a tantalum-tungsten alloy product, comprising the steps of:
(1) providing spherical tantalum-tungsten alloy powder, wherein the spherical tantalum-tungsten alloy powder is characterized in that:
   a lower limit of the particle size is 15 µm to 25 µm (e.g., 18 µm to 22 µm, e.g., 20 µm);
   an upper limit of the particle size is 50 µm to 60 µm (e.g., 53 µm to 58 µm, e.g., 55 µm);
   a time for 50 g of the powder to pass through a standard funnel is 5 seconds to 10 seconds (e.g., 6 seconds to 8 seconds);
   a sphericity of the powder is ≥0.8 (e.g., ≥0.9);
   a hollow particle rate of the powder is ≤5% (e.g., ≤3%);
   an apparent density is 9 g/cm³ to 11 g/cm³ (e.g., 9.5 g/cm³ to 10 g/cm³);
(2) processing and molding the spherical tantalum-tungsten alloy powder by using a 3D printing process to obtain a printed blank;
(3) performing printing post-treatment on the printed blank;
(4) performing vacuum heat treatment on a product of the previous step;
wherein the vacuum heat treatment is performed at a temperature of 1350 °C to 1750 °C (e.g., 1450 °C to 1550 °C, e.g., 1550 °C to 1650 °C) for 30 minutes to 90 minutes (e.g., 40 minutes to 60 minutes, e.g., 60 minutes to 80 minutes).

In some embodiments, the tantalum-tungsten alloy has a titanium content of 85 wt% to 95 wt% (e.g., 90 wt%), and a tungsten content of 5 wt% to 15 wt% (e.g., 10 wt%).

In some embodiments, the printing post-treatment comprises one or more operations selected from the group consisting of machining, surface treating and cleaning.

In some embodiments, in the 3D printing process, components to be printed comprises: a contour portion, a support portion, an upskin portion, a downskin portion, and a support portion.

In some embodiments, printing parameters for the contour portion include one or more parameters selected from the group consisting of:
Contour Laser Power of 190 W to 210 W;
Contour Speed of 550 mm/s to 650 mm/s;
Contour STD Partition Threshold of 0.01.

In some embodiments, printing parameters for the fill portion include one or more parameters selected from the group consisting of:
Fill Scan Count of 1 time to 3 times;
Fill Rotation Angle of 45° to 67°;
Fill Laser Power of 300 W to 330 W;
Fill Speed of 550 (mm/s) to 650 (mm/s);
Fill Distance of 0.1 mm to 0.14 mm;
Stripe Width of 3 mm to 10 mm;
Stripe Fill Distance of 0.1 mm to 0.15 mm;
Stripe Overlap of 0.08 mm to 0.16 mm;
Stripe Offset of 6.10 mm to 6.18 mm.

In some embodiments, printing parameters for the upskin portion include one or more parameters selected from the group consisting of:
Upskin Fill Count of 2 times to 3 times;
Upskin Laser Power of 200 W to 300W;
Upskin Speed of 450 mm/s to 550 mm/s;
Upskin Fill Distance of 0.01 mm to 0.12 mm.

In some embodiments, printing parameters for the downskin portion include one or more parameters selected from the group consisting of:
Downskin Fill Count of 2 times to 3 times;
Downskin Laser Power of 200 W to 300W;
Downskin Speed of 450 mm/s to 550 mm/s;
Downskin Fill Distance of 0.01 mm to 0.12 mm.

In some embodiments, printing parameters for the support portion include one or more parameters selected from the group consisting of:
Support Scan Count of 1 time to 2 times;
Support Scan Laser Power of 200 W to 280 W;
Support Scan Speed of 650 mm/s to 750 mm/s.

In a second aspect, the present application provides a tantalum-tungsten alloy product prepared by any one of the above-described methods.

In some embodiments, the tantalum-tungsten alloy product has one or more of the following characteristics:
tensile strength of 650 MPa to 850 MPa, e.g., 700 MPa to 800 MPa, e.g., 750 MPa;
yield strength of 550 MPa to 750 MPa, e.g., 600 MPa to 700 MPa, e.g., 650 MPa;
percentage elongation of 25% to 45%, e.g., 30% to 40%, e.g., 35%;
density of 16 g/cm³ to 17 g/cm³, e.g., 16.4 g/cm³ to 16.9 g/cm³.

In some embodiments, 3D printing technology is a technology for fabricating three-dimensional solid model by stacking materials such as powder, wires stock and liquid layer by layer according to a path which is planned by establishing a three-dimensional digital model and using a slicer software. As a supplement to traditional fabrication, the 3D printing technology is mainly characterized in no need of die sinking, a high material utilization rate and an ability of manufacturing complex structural components that are hardly processed in a traditional fabrication, and thus it is widely applied in various fields such as aerospace, industrial manufacture, medical education and the like. Among them, representative processes of powder bed fusion technology include Selective Laser Sintering (SLS), Selective Laser Melting (SLM) and Electron Beam Melting (EBM), and a representative process of directed energy deposition technology is Laser Engineered Net Shaping (LENS). The Selective Laser Melting (SLM) is also one of the powder bed fusion technology, being a metal 3D printing technology developed on the basis of the SLS, and its molding principle is very similar to that of the SLS, differing in that the SLM has a high laser temperature that can fully melt all metal powders.

The SLM should belong to SLS. The SLS technology was originated in 1986. A first SLS molding machine was successfully developed in 1988, which was subsequently commercialized by DTM Corporation in the United States, and a commercial production equipment Sinterstation 2000 molding machine of SLS was introduced in 1992. The SLS technology has been widely used in various fields over the past more than twenty years, and companies that study the selective laser sintering equipment and process include DTM Corporation, 3D Systems Corporation, EOS Corporation in German, and the like.

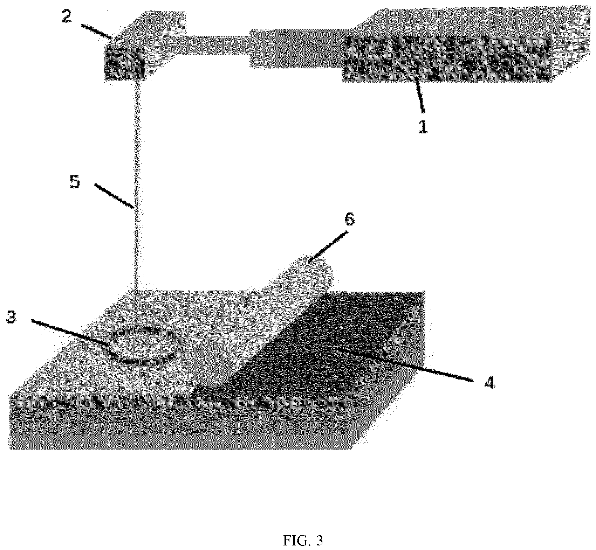

Molding principles of the selective laser sintering process are shown in FIG. 3. In a selective laser sintering (SLS) processing procedure, a layer of powder 4 is firstly spread on the upper surface of a molded workpiece 3 by a press roller 6, and a numerical control system 1 controls a laser 2 to emit a laser beam 5 to scan and irradiate the powder layer according to the section contour of the layer, to raise the temperature of the powder 4 to its melting point, thereby the powder 4 is sintered and bonds to the underneath molded workpiece 3. After the section of one layer is sintered, the processing table will descend by one layer thickness, and at this time, on the table, the press roller 6 will further spread a layer of the powder 4 uniformly to start sintering of the section of the new layer. As such, the operations are repeated until the workpiece is completely molded.

### Beneficial Effects of the Present Application:

(1) The present application provides a novel process for processing a tantalum-tungsten alloy product, which is a 3D printing process, and aims to overcome defects of traditional processes such as great processing difficulty and difficult processing of complex components, and develop a suitable 3D printing process for tantalum-tungsten alloy materials by a selective laser melting process with spherical tantalum-tungsten powder as a raw material, so that the tantalum-tungsten alloy product may be prepared by the 3D printing process, thereby solving existing problems in the preparation of the tantalum-tungsten alloy product by a conventional process, reducing processing costs, shortening a research period of the product, and producing complex tantalum-tungsten products to meet performance requirements of high temperature resistance and corrosion resistance in military and aerospace fields.
(2) The present application, by optimizing physical and chemical performances of raw material powder, optimizing 3D printing parameters and performing a specific step of vacuum heat treatment, obtains a 3D printed product having excellent mechanical performances.

### Brief Description of the Drawings

FIG. 1 is a 200-fold magnified photograph of the spherical tantalum-tungsten alloy powder of Example 1.
FIG. 2 shows photographs of the tantalum-tungsten alloy products of some embodiments.
FIG. 3 is a schematic diagram showing molding principles of the selective laser sintering (SLS) process of some embodiments.

### Specific Modes for Carrying Out the Present Application

At now, the specific embodiments of the present application are described in detail. While the present application will be described in combination with these specific embodiments, it should be recognized that it is not intended to limit the application to these specific embodiments. On the contrary, the embodiments are intended to cover alternative, modified and equivalent embodiments which may be included within the spirit and scope of the present application defined by the pending claims. In the following descriptions, a number of specific details are described in order to provide thorough appreciations of the present application. The present application may be carried out without some or all of these specific details. In other instances, not to unnecessarily obscure the present application, well known process operations are not described in detail.

The singular forms "a", "an", and "the", when used in combination of the wording "comprising", "method comprising" or similar expressions in the present specification and the attached claims, include plural references unless clearly indicated in the context otherwise. Unless defined otherwise, all technical and scientific terms used here have the same meaning as those commonly appreciated by those skilled in the technical field of the present application.

Unless illustrated particularly, the test conditions used in the examples of the present application are routine test conditions in the art. Unless illustrated particularly, all the reagents used in the examples of the present application are commercially available.

The process of the present application is described generally below:
Preparing printing raw materials → modelling → 3D printing → post-treatment

With a tantalum-tungsten alloy as the main raw material, the main process is described below:

### 1. Preparation of Printing Raw Material

The raw material was selected to be low-oxygen spherical tantalum-tungsten powder formed by performing plasma spheroidization treatment on a tantalum-tungsten alloy obtained by an electron beam melting, having a particle size distribution of 15 microns - 55 microns, a high sphericity, and a good fluidity.

### 2. Modelling

2.1 A model was established by using a modelling software (e.g., Solidworks).

2.2 In some embodiments, lightweight or porous treatments were performed on the model with 3-Matic. Since the tantalum-tungsten alloy per se had a high density, some solid portions of a part can be converted into porous structures in the case of certain requirements on the weight, thereby effectively reducing the weight of the part. Meanwhile, the model was converted into an STL mode, and it is treated based on a triangular facet, to reduce cycle repetitions between reverse engineering and traditional CAD.

2.3 Magics Software was used to repair the model and process details of the model, analyze the feasibility of printing the model and if a support should be designed. If necessary, the support was designed according to characteristics of materials, to assure no occurrence of warping and infeasible printing due to partial suspension in the printing process.

### 3. Printing

3.1 For the designed model and support, Buildstar Software was used to perform typesetting, setting material packs, regulating workpieces parameters, and then, a slicing treatment was performed, i.e., to observe the printing procedure of the model in theoretical situations and to predict a printing time and a required powder loading amount, thereby assuring smooth printing of the part.

3.2 By controlling parameters such as laser spot size, laser power, scan speed, scan path, powder-spreading layer thickness, and the like, samples such as tensile samples, metallographic samples, density samples and the like were printed at different parameters, and were detected for Performance parameters. From detection results of the samples, optimal printing parameters can be obtained, thereby effectively controlling internal metallurgical defects of the printed part, and enabling mechanical performances and high temperature performances to reach index requirements.

### 4. Printing Post-Treatments

The printed part was cut off from a substrate with a wire cutting, and subsequently, the support and the like on the printed part were removed with a tool, a region with the removal of the support should be cleaned up by a file, and the entire part was treated with a sandblasting machine.

### 5. Vacuum Heat Treatment

A product of the preceding step was heat treated with a vacuum furnace, at a vacuum degree of ≤7×10⁻³ Pa, wherein the heat treatment was set to have a temperature of 1350 °C to 1750 °C, and a time of 30 minutes to 90 minutes.

With a tantalum-tungsten alloy as an example, specific test schemes were shown below:

### Example 1

### 1. Preparation of Printing Raw Material

The raw material powder was low-oxygen-content spherical tantalum-tungsten alloy powder formed by performing plasma spheroidization treatment on a tantalum-tungsten alloy (Ta=90 wt% and W=10 wt%) obtained by an electron beam melting, with a particle size distribution of 22.74 µm to 50.95 µm, a high sphericity, and a good fluidity.

**Table 1: Ingredients of Powder**

| Elements | C | H | O | N | W | Fe | Cr | Ni | Si | |
|---|---|---|---|---|---|---|---|---|---|---|
| Measured values (ppm) | 7 | 15 | 160 | 20 | 10.15 | 4 | 3 | 3 | 5 | |

| Elements | Nb | Ti | Al | Mn | Mg | Sn | Mo | Ca | Cu | Zr |
|---|---|---|---|---|---|---|---|---|---|---|
| Measured values (ppm) | <10 | <1 | <1 | <1 | <1 | <1 | <5 | <5 | <1 | <1 |

Physical performances of the raw material powder were shown in the following table.

**Table 2 Physical Performances of Powder**

| Items | Measured values |
|---|---|
| Particle size distribution (µm) | 22.74 µm - 50.95 µm |
| Fluidity (s) | 5.9 s |
| Sphericity | 0.93 |
| Hollow particle rate | < 5% |
| Apparent density | 9.8 g/cm³ |

| | |
|---|---|
| *Reference to GB/T19077-2016 "Particle Size Analysis - Laser Diffraction Method" for standards of detecting the particle size distribution *Reference to GB/T1482 "Metallic Powders - Determination of Flow time by means of a Calibrated Funnel (Hall flowmeter)" for standards of detecting the fluidity *Reference to YS/T1297-2019 "Measuring Method for Sphericity Ratio of Titanium and Titanium Alloy Powders" for standards of detecting the sphericity *Reference to a metallographic method for standards of detecting the hollow particle rate, which was observed by inlaying and polishing samples *Reference to GB/T1479.1-2011 "Metallic Powders - Determination of Apparent Density - Part 1: Funnel method" for standards of detecting the apparent density | |

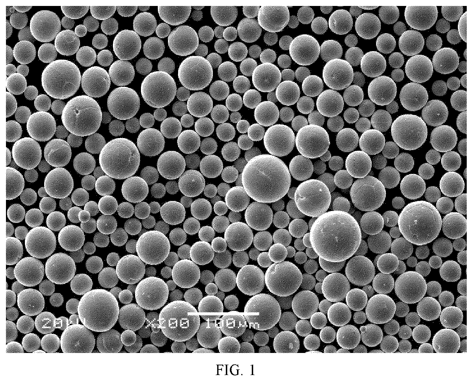

A scan electron microscope photograph of the raw material powder was shown in FIG. 1. As shown in the figure, the raw material powder had a high sphericity.

### 2. Modelling

To study suitable printing parameters for the tantalum-tungsten alloy powder, a model for a tensile test sample was established with a modelling software, and the size specification of the tensile test sample was in accordance with the standard GB/T6397-1986 "Metallic Materials - Test Pieces for Tensile Testing".

### 3. Setting Printing Parameters of Tantalum-Tungsten Alloys

The printing parameters of the tantalum tungsten alloy were set with reference to the following table.

Crucial parameters in 3D printing parameters were illustrated as follows:
Contour parameters: powers and Contour STD Counts of laser scanning the surface region of a component, in which the scan distance was 0 when the Contour STD Count was 1, and the scan distance was effective when the Contour STD Count was greater than 1. The distance parameter was set in proportional parameters. The contour STD laser power was a laser power. A plurality of lasers having different contour STD laser power and contour scan speeds may be arranged respectively, and the number of the arranged lasers depended on the value of the Contour STD Count.

Contour STD Partition Threshold: a critical value for distinguishing the upskin and downskin during laser scan, which was effective only when a corresponding parameter of contour STD Partition on/off was 1. When the overhang value of a region was greater than the contour STD partition threshold, the contour of the region would be determined as the contour of downskin. The contour STD partition threshold depended on layer thickness and overhang parameter together, and its value was an absolute value.

Upskin and downskin parameters: according to a position for placing the component, there are two surfaces parallel to a molding substrate of the component, wherein one which would not be further scanned after one laser scan was the upskin, and the other which was further scanned after one laser scan was the downskin that may be scanned repeatedly to meet molding requirements of the component.

Support: a structure was set for the downskin of the component to assist the scan molding of the downskin and ensure successful printing of the component,, which may be classified into a linear structure, a dot-shaped structure, a solid structure, a conical structure, a net structure, a contour structure, a tree-shaped structure and many other structures.

Fill Scan Count: a count of laser scan of non-contour regions of a component, wherein the directions of two adjacent scans were vertical to each other.

Fill Speed: a speed at which the laser scans the region.

Fill Distance: a distance between two adjacent laser lines at the same scan section.

Fill Rotat Angle: an included angle formed between two scan directions, wherein after scanning one layer with laser at one scan direction, scanning the next layer was performed at another scan direction obtained by rotating the previous scan direction in a certain angle.

Stripe Width: a width of a distance which is formed by a combination of lasers during laser scan.

Stripe Fill Distance: a distance between lasers in a fixed stripe width.

Stripe Overlap: an overlapped width distance formed by two adjacent strips.

Stripe Offset: an offset distance of stripes between adjacent layers.

Samples 1 and 3 were printed according to the parameters in Table 3.1. Samples 2 and 4 were printed according to the parameters in Table 3.2.

**Table 3.1: 3D Printing Parameters of Tantalum-Tungsten Alloys (Samples 1, 3)**

| Contour | | | | | |
|---|---|---|---|---|---|
| Contour Laser Power/W | Contour Speed/(mm/s) | | | | Contour STD Partition Threshold |
| 190 | 550 | | | | 0.01 |

| Fill | | | | | |
|---|---|---|---|---|---|
| Fill Scan Count | Fill Rotation Angle/° | Fill Laser Power/W | | Fill Speed/(mm/s) | Fill Distance/mm |
| 1 | 45 | 300 | | 550 | 0.14 |

| Strip Width/mm | Strip Fill Distance/mm | | Stripe Overlap/mm | | Strip Offset/mm |
|---|---|---|---|---|---|
| 10 | 0.15 | | 0.08 | | 6.18 |

| Upskin | | | | | |
|---|---|---|---|---|---|
| Upskin Fill Count | Upskin Laser Power/W | | Upskin Speed/(mm/s) | | Upskin Fill Distance/mm |
| 2 | 200 | | 450 | | 0.12 |

| Downskin | | | | | |
|---|---|---|---|---|---|
| Downskin Fill Count | Downskin Laser Power/W | | Downskin Speed/(mm/s) | | Downskin Fill Distance/mm |
| 2 | 200 | | 450 | | 0.12 |

| Support | | | | | |
|---|---|---|---|---|---|
| Support Scan Count | Support Scan Laser Power/W | | | | Support Scan Speed/(mm/s) |
| 0.5 | 200 | | | | 650 |

**Table 3.1: 3D Printing Parameters of Tantalum-Tungsten Alloys (Samples 2, 4)**

| Contour | | | | | |
|---|---|---|---|---|---|
| Contour Laser Power/W | Contour Speed/(mm/s) | | | | Contour STD Partition Threshold |
| 210 | 650 | | | | 0.01 |

| Fill | | | | | |
|---|---|---|---|---|---|
| Fill Scan Count | Fill Rotation Angle/° | Fill Laser Power/W | | Fill Speed/(mm/s) | Fill Distance/mm |
| 1 | 45 | 320 | | 650 | 0.14 |

| Strip Width/mm | Strip Fill Distance/mm | | Stripe Overlap/mm | | Strip Offset /mm |
|---|---|---|---|---|---|
| 10 | 0.15 | | 0.08 | | 6.18 |

| Upskin | | | | | |
|---|---|---|---|---|---|
| Upskin Fill Count | Upskin Laser Power/W | | Upskin Speed/(mm/s) | | Upskin Fill Distance /mm |
| 2 | 300 | | 550 | | 0.12 |

| Downskin | | | | | |
|---|---|---|---|---|---|
| Downskin Fill Count | Downskin Laser Power/W | | Downskin Speed/(mm/s) | | Downskin Fill Distance /mm |
| 2 | 300 | | 550 | | 0.12 |

| Support | | | | | |
|---|---|---|---|---|---|
| Support Scan Count | Support Scan Laser Power/W | | | | Support Scan Speed/(mm/s) |
| 0.5 | 280 | | | | 750 |

### 4. Printing Post-Treatment

The printed part was cut off from the substrate by wire cutting, and subsequently, the support and the like on the printed part were removed with a tool, a region with the removal of the support should be cleaned up by a file, and the entire part was treated with a sandblasting machine.

### 5. Vacuum Heat Treatment

The tensile test sample products prepared in the previous step were numbered with numbers 1-4.

No vacuum heat treatment was performed on products No. 1-2.

A vacuum heat treatment was performed on products No. 3-4.

Parameters of the vacuum heat treatment were shown below: performing the heat treatment on the products in the previous step with a vacuum furnace, at a vacuum degree of ≤7×10⁻³ Pa, setting the temperature of the heat treatment to be 1450 °C, and keeping this temperature for 90 minutes.

### 6. Performance Tests of Tantalum-Tungsten Alloy Printed Products

The above printing method was utilized to prepare tensile test samples numbered with 1-4, and density and hardness test samples numbered with 5-10. A mechanical performance test was performed on the tensile test samples according to GB/T228-2002 "Metallic Materials - Tensile Testing at ambient temperature"; a density was detected according to GB/T3850-2015 "Impermeable Sintered Metal Materials and Hardmetals - Determination of Density"; a hardness was performed according to GB/T230.1-2009 "Metallic materials - Rockwell hardness test". The results were shown in the following Tables 4 and 5.

**Table 4: Mechanical Performances of Tantalum-Tungsten Alloy 3D Printed Samples**

| No. | Operations | Tensile strength/MPa | Yield strength/MPa | Percentage Elongation |
|---|---|---|---|---|
| 1 | Non-vacuum heat treatment | 435.8 | 370.4 | 0.7 |
| 2 | Non-vacuum heat treatment | 476.6 | 438 | 1.3 |
| 3 | Vacuum heat treatment | 740.5 | 561.6 | 43.3 |
| 4 | Vacuum heat treatment | 746.2 | 629.7 | 44.7 |

As can be seen by analyzing Table 4, the samples that were subjected to vacuum heat treatment exhibited improved tensile strength, yield strength and percentage elongation.

### Example 2

A 10×10×10 mm density block was printed with different printing process parameters and subjected to vacuum heat treatment with the following vacuum heat treatment parameters: performing the heat treatment on a product in the previous step with a vacuum furnace, at a vacuum degree of ≤7×10⁻³ Pa, setting the temperature of the heat treatment to be 1450 °C, and keeping this temperature for 90 minutes.

**Table 5: Density Results of Tantalum-Tungsten Alloy 3D Printed Samples**

| No. | Density/(g/cm³) | Laser power/W | Scan speed/(mm/s) | States of Samples |
|---|---|---|---|---|
| 5 | 16.78 | 300 | 600 | Heat treatment at 1450 °C for 90 min |
| 6 | 16.42 | 330 | 500 | |
| 7 | 16.65 | 330 | 600 | |
| 8 | 16.68 | 330 | 500 | |
| 9 | 16.79 | 330 | 550 | |
| 10 | 16.81 | 330 | 600 | |

As can be seen by analyzing Table 5, after the 10×10×10 mm density blocks printed with different process parameters were heat treated, they had different density values, wherein the sample blocks printed with the laser power of 330 W and the scan speed of 600 mm/s had a highest density.

### Example 3

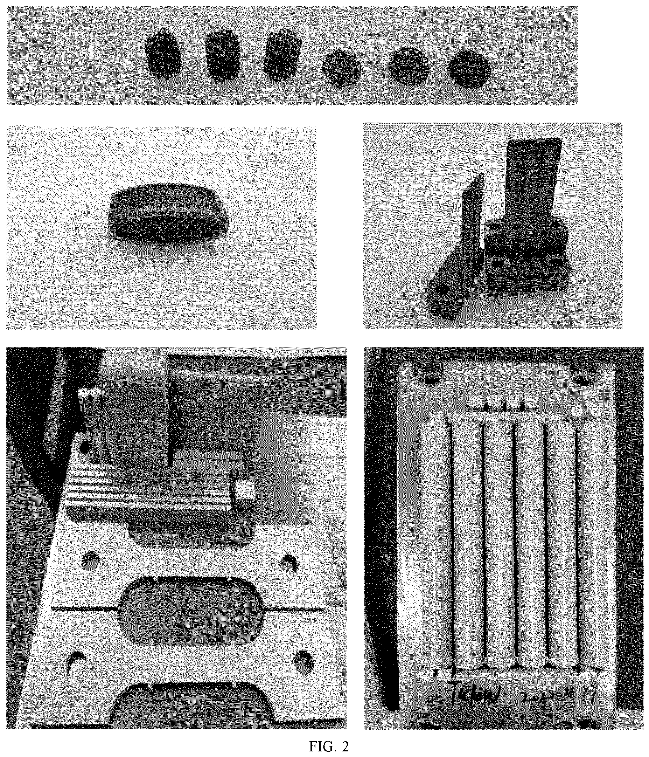

With reference to the above process parameters, various types of products were further printed, and their photographs were shown in FIG. 2.

As can be seen from the above descriptions and demonstration of the examples, the present application prepares tantalum-tungsten alloy printed samples with improved mechanical performances with spherical tantalum-tungsten alloy powders having specific physicochemical parameters.

Finally, it should be illustrated that the above Examples are only used for illustrating the technical solution of the present application but not for limiting it; while the present application is described in detail with reference to the preferred Examples, it should be understood for those skilled in the art that modifications to the specific embodiments of the present application and equivalent substitutions to a part of the technical features can be still made, without departing from the spirit of the application, each of them should be contained in the scope of the technical solution as claimed in the present application.

## Claims

1. A preparation method for a tantalum-tungsten alloy product, comprising the steps of:
(1) providing spherical tantalum-tungsten alloy powder, wherein the spherical tantalum-tungsten alloy powder is **characterized in that**:
a lower limit of the particle size is 15 µm to 25 µm;
an upper limit of the particle size is 50 µm to 60 µm;
a time for 50 g of the powder to pass through a standard funnel is 5 seconds to 10 seconds;
a sphericity of the powder is ≥0.8;
a hollow particle rate of the powder is ≤5%;
an apparent density is 9 g/cm³ to 11 g/cm³;
(2) processing and molding the spherical tantalum-tungsten alloy powder by using a 3D printing process to obtain a printed blank;
(3) performing printing post-treatment on the printed blank;
(4) performing vacuum heat treatment on a product from the previous step;
wherein the vacuum heat treatment is performed at a temperature of 1350 °C to 1750 °C for 30 minutes to 90 minutes.

2. The preparation method according to claim 1, wherein the tantalum-tungsten alloy has a titanium content of 85 wt% to 95 wt%, and a tungsten content of 5 wt% to 15 wt%.

3. The preparation method according to claim 1, wherein the printing post-treatment comprises one or more operations selected from the group consisting of machining, surface treating and cleaning.

4. The preparation method according to claim 1, wherein in the 3D printing process, components to be printed comprises: a contour portion, a support portion, an upskin portion, a downskin portion, and a support portion.

5. The preparation method according to claim 4, wherein printing parameters for the contour portion include one or more parameters selected from the group consisting of:
Contour Laser Power of 190 W to 210 W;
Contour Speed of 550 mm/s to 650 mm/s;
Contour STD Partition Threshold of 0.01 to 0.03 (an absolute value).

6. The preparation method according to claim 4, wherein printing parameters for the fill portion include one or more parameters selected from the group consisting of:
Fill Scan Count of 1 time to 3 times;
Fill Rotation Angle of 45° to 67°;
Fill Laser Power of 300 W to 330 W;
Fill Speed of 550 (mm/s) to 650 (mm/s);
Fill Distance of 0.1 mm to 0.14 mm;
Stripe Width of 3 mm to 10 mm;
Stripe Fill Distance of 0.1 mm to 0.15 mm;
Stripe Overlap of 0.08 mm to 0.16 mm;
Stripe Offset of 6.10 mm to 6.18 mm.

7. The preparation method according to claim 4, wherein printing parameters for the upskin portion include one or more parameters selected from the group consisting of:
Upskin Fill Count of 2 times to 3 times;
Upskin Laser Power of 200 W to 300W;
Upskin Speed of 450 mm/s to 550 mm/s;
Upskin Fill Distance of 0.01 mm to 0.12 mm.

8. The preparation method according to claim 4, wherein printing parameters for the downskin portion include one or more parameters selected from the group consisting of:
Downskin Fill Count of 2 times to 3 times;
Downskin Laser Power of 200 W to 300W;
Downskin Speed of 450 mm/s to 550 mm/s;
Downskin Fill Distance of 0.01 mm to 0.12 mm.

9. The preparation method according to claim 4, wherein printing parameters for the support portion include one or more parameters selected from the group consisting of:
Support Scan Count of 1 time to 2 times;
Support Scan Laser Power of 200 W to 280 W;
Support Scan Speed of 650 mm/s to 750 mm/s.

10. A tantalum tungsten alloy product prepared by the method according to any one of claims 1 to 9.

11. The tantalum-tungsten alloy product according to claim 10, which has one or more of the following characteristics:
Tensile strength of 650 MPa to 850 MPa;
Yield strength of 550 MPa to 750 MPa;
Percentage elongation of 25% to 45%;
Density of 16.4 g/cm³ to 16.9 g/cm³.
